# EUROPEAN PATENT APPLICATION

(11) **EP 1 170 227 A2**
(43) Date of publication of application: **09.01.2002**
(21) Application number: 01100878.6
(22) Date of filing: 16.01.2001
(51) Int. Cl.: B65G 47/14

(54) **Method and apparatus for ejecting defective containers in a machine for straightening containers**

(30) Priority: 13.04.2000 IT PR200026
(71) Applicant: Lanfranchi, Lino, 43044 Collecchio (Parma) (IT)
(72) Inventor: Lanfranchi, Lino, 43044 Collecchio (Parma) (IT)

(57) **Abstract**

A machine (1) for straightening containers (2) comprises an apparatus (3) for ejecting defective containers (2) provided with an aspiration channel (17) positioned along a route followed by the containers (2). The aspiration channel (17) comprises a chamber (19) for accumulating the containers provided with a door (25) movable between a closed position and an open position for offloading the defective containers accumulated on the bottom. Further provided is a plane (26) movable between a resting position and a working position in which it inferiorly closes the accumulation chamber (19) to receive the containers and prevent preferential passages of the flow of air through the open door (25). The door (25 and the plane (26) are commanded by a lever mechanism (27) structured in such a way as to move first the plane (26) and subsequently the door (25).

## Description

The present invention relates to a method and an apparatus for ejecting defective containers in a machine for straightening containers.

As is well known, machines for straightening containers are destined to the continuous feeding of subsequent machines or stations, for instance for filling or bottling. For this purpose, the aforesaid machines for straightening containers are so constructed as to receive the containers arranged in random fashion and to straighten them, positioning them vertically and with their mouth facing upwards.

Some types of machines for straightening containers are known, which differ from each other both in their structure and in their operation. A substantially common concept for the different machines is to flip the containers by 90°, moving them from a position in which they lie down and bear down on the lateral wall to an erect position in which they bear on the bottom.

The flipping motion generally takes place in one or more positions in which the support whereon the containers lie down is removed; as a consequence, the containers rotated pivoting on their neck or on their mouth area and position themselves erect and with the mouth oriented upwards.

The Applicant has noted drawbacks in the container flipping phase, especially in the case of defective containers, whereby the container is not flipped and remains lying down, becoming stuck inside the machine.

To overcome this drawback, machines for straightening containers are known which are provided with nozzles connected to a compressed air system. When a sensor detects the presence of defective containers that have not been flipped, the nozzles are operated and eject the flipped containers routing them to lateral collection cavities.

This solution also presents some drawbacks. In the first place, the presence of blowing nozzles introduces air and thus impurities into the machine, which can limit the quality of the final product and pollute it. Secondly, the proposed solution requires a rather complex structure, in particular because of the presence of the sensor, and is not suited for high production rates.

The aim of the present invention is to eliminate the aforesaid drawbacks making available a method and an apparatus for ejecting defective containers in a machine for straightening containers, which are simple, reliable and suitable for high production rates.

Said aims are fully achieved by the apparatus for ejecting defective containers in a machine for straightening containers of the present invention, which is characterised by the contents of the claims set out below and in particular in that it comprises an aspiration duct provided with an inlet section positioned along a route followed by the containers for aspirating defective containers.

Moreover, said aims are fully achieved by the method for ejecting defective containers in a machine for straightening containers of the present invention, which is characterised by the contents of the claims set out below and in particular in that it comprises a phase of aspirating defective containers, carried out along a route followed by the containers themselves.

This and other features shall become more readily apparent from the following description of a preferred embodiment illustrated, purely by way of non limiting example, in the accompanying drawing tables, in which:
- Figure 1 shows a top view of a machine for straightening containers provided with an apparatus according to the present invention;
- Figures 2 - 7 show a partially sectioned lateral view of a detail of Figure 1;

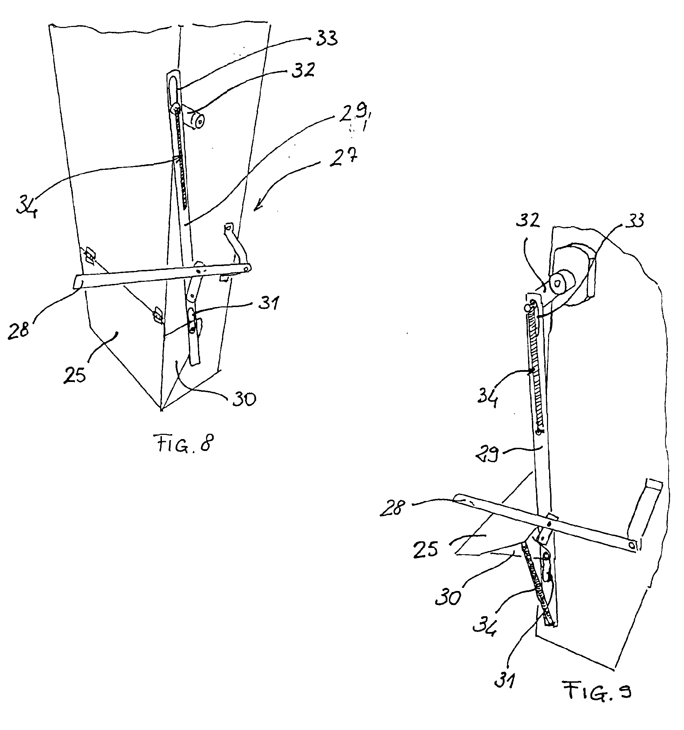

- Figure 8 shows in detail the lever mechanism of Figure 4 in resting position;
- Figure 9 shows in detail the lever mechanism of Figure 4 in working position.

With reference to the figures, the number 1 globally indicates a machine for straightening containers 2, in particular bottles, provided with an apparatus 3 for ejecting defective containers.

The figure shows a particular type of machine for straightening containers so as to define an embodiment of the apparatus of the present invention, without thereby restricting the application of said apparatus only to the type of machine described herein.

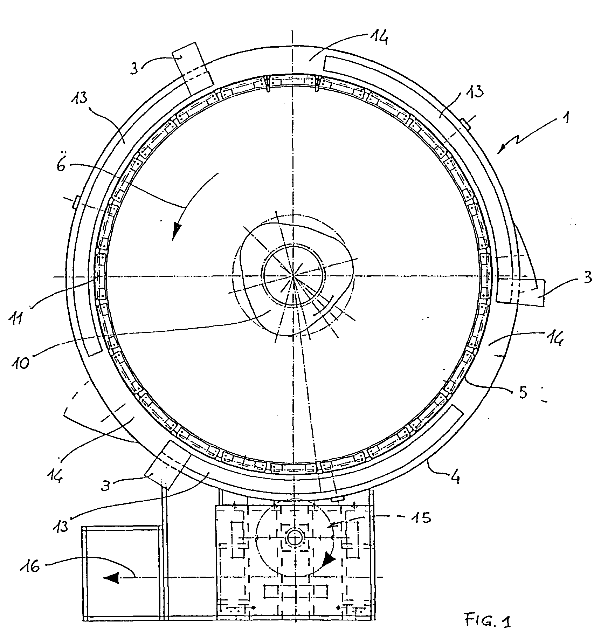

Figure 1 shows the machine from the top wherein the reference number 4 indicates a fixed outer cylinder having vertical axis, whilst the number 5 indicates an inner cylinder, coaxial with the outer cylinder and rotating according to the direction of rotation indicated by an arrow 6.

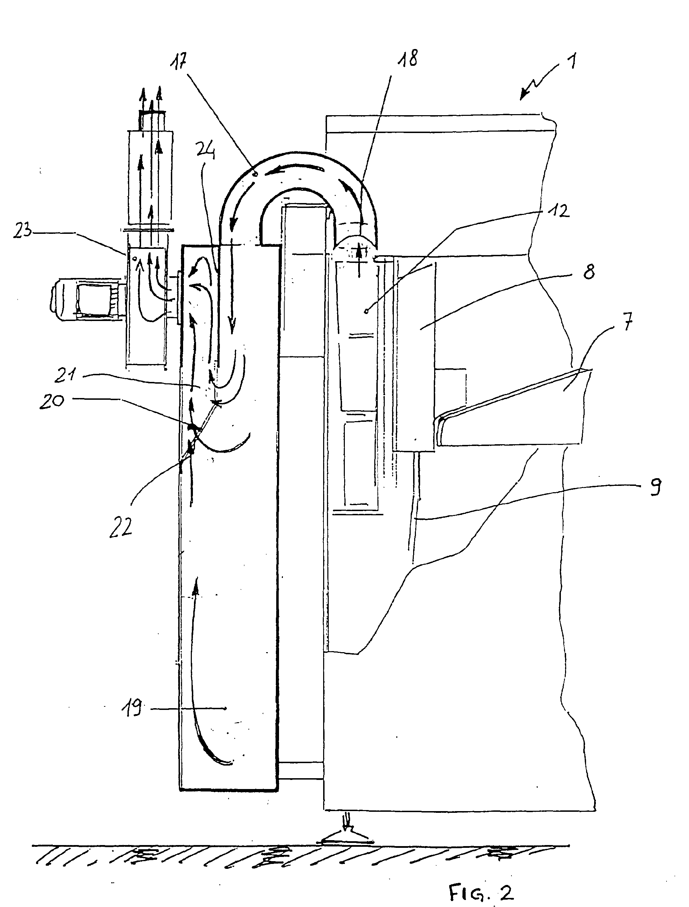

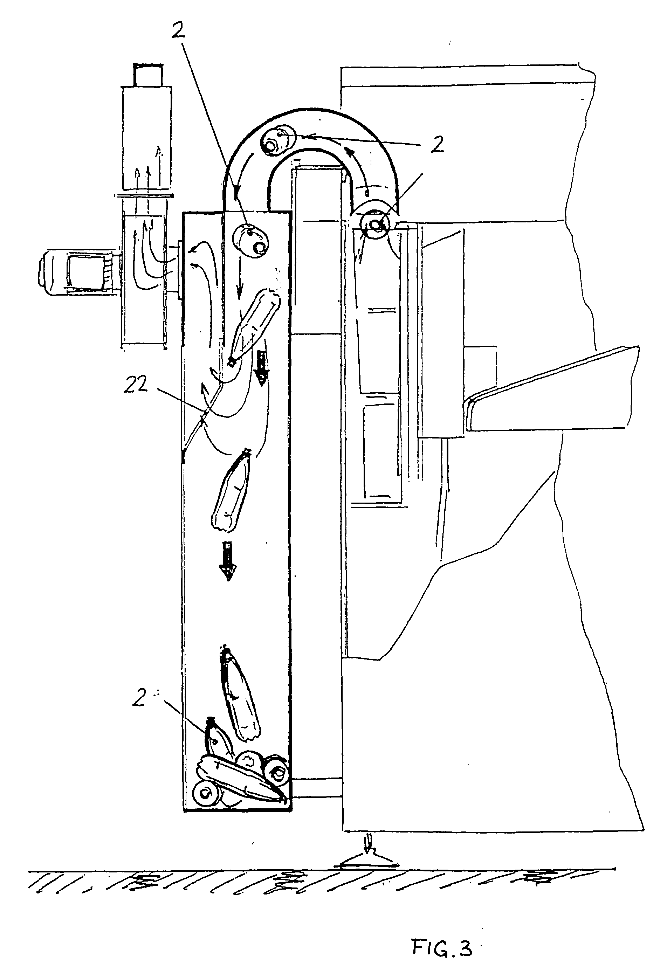

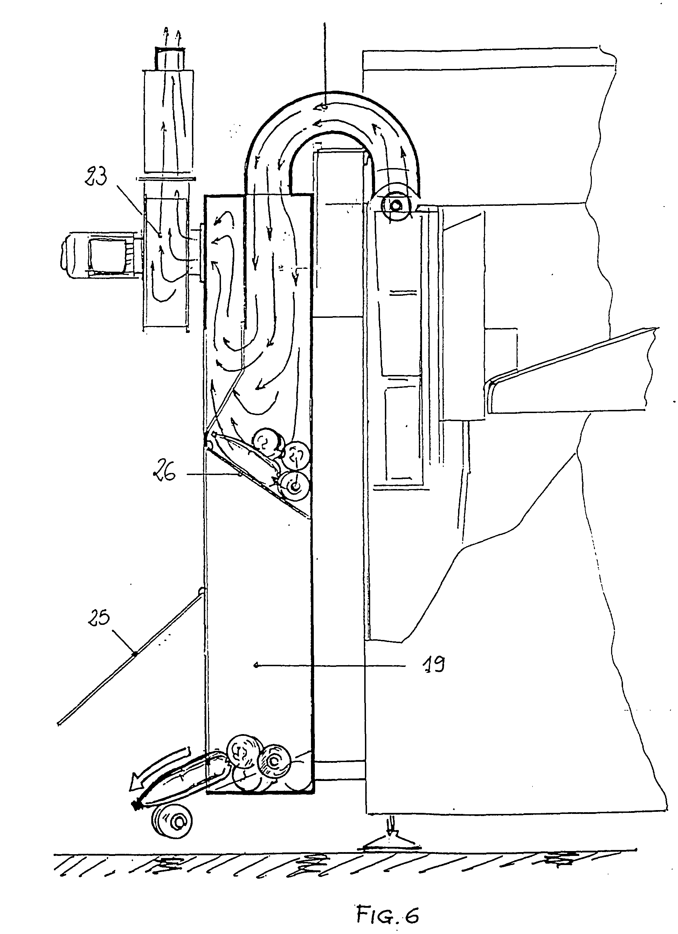

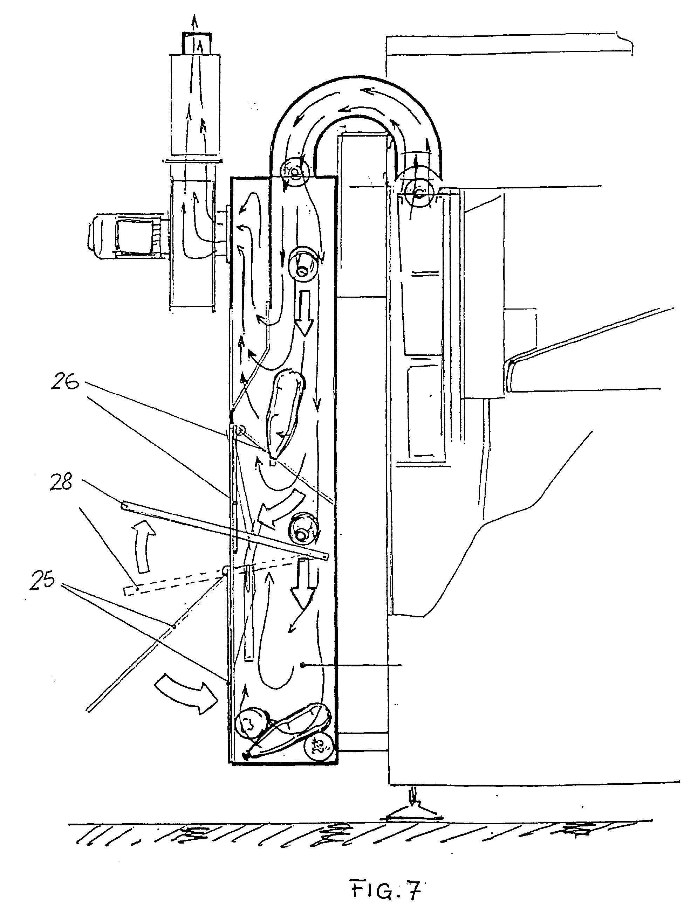

As shown in Figures 2 - 7, internally to the inner cylinder 5 is provided a fixed cone 7, also coaxial with the outer cylinder and with the inner cylinder. Between the inner cylinder 5 and the cone 7 are inserted some hoists 8, integral with the inner cylinder 5 in its rotating motion according to the arrow 6.

The hoists 8, in addition to rotating together with the inner cylinder 5, translate relative thereto to transfer the containers 2 from the base of the cone 7 to the top of the inner cylinder 5.

The alternating translation motion of the hoists 8 is commanded by arms 9, only schematically shown in Figure 2, which have an end able to slide on a fixed cam 10, shown in Figure 1.

Between the inner cylinder 5 and the outer cylinder 4 are inserted means for evacuating the containers, embodied by cups 11 and fall channels 12 mounted on the external lateral surface of the inner cylinder 5 and thus rotating therewith.

The cups 11 are positioned at the top of the inner cylinder 5 and uniformly distributed along the outer circumference to receive containers that lie down and are positioned on one side.

The fall channels 12 are positioned inferiorly to the cups and are generally constructed in a single piece with the cup itself.

Between the cups 11 and the fall channels 12 is inserted a fixed ring 13 integral with the inner wall of the outer cylinder 4. Said ring constitutes the bottom of the cups 11 and thus provides a support whereon the containers 2 are positioned lying on a side.

The fixed ring 13 has at least an interruption 14 in which the containers 2 are flipped substantially by 90° from the cups 11 to the fall channels 12. The machine shown in Figure 1 has three interruptions 14 of the ring 13 corresponding to three container flipping points.

During the rotation of the inner cylinder 5 and hence of the cups 11, the containers are driven along a first route substantially coinciding with a portion of the circular trajectory followed by each of the cups and hence proceed according to the direction of advance indicated by the arrow 6.

Encountering one of the interruptions 14 of the fixed ring 13, the containers 2 are flipped, positioning themselves erect with the mouth oriented upwards and follow a second route which in the segment internal to the machine substantially coincide with a portion of the circular trajectory followed by the fall channels 12 integrally with the inner cylinder 5. Moreover, the second route also develops exteriorly to the machine 1 along a transfer star 15 and continues towards the subsequent processing stations. In Figure 1, the external segment of the second route is shown schematically with a dashed line 16 in which the direction of advance of the containers is indicated.

The apparatus 1 originally comprises an aspiration channel 17 provided with an inlet section 18 positioned along a route followed by the containers 2 to aspirate the defective containers. In particular in the illustrated embodiment, the inlet section 18 is positioned immediately downstream, according to the direction of advance of the containers along the first route, relative to the interruption 14 of the fixed ring 13 that serves as a support for the containers 2. The containers that are not flipped are thereby ejected into the fall channels 12; they would otherwise continue along the first route internally to the cups 11. The automatic ejection of the defective container is thereby obtained without interrupting the operation of the straightening machine and consequently making the cup immediately available for a new container to be straightened.

The containers 1 are moreover advantageously removed from the machine because the aspiration channel 17 comprises a chamber 19 for the accumulation of the defective containers.

To prevent the containers 2 from becoming stuck along the aspiration channel 17, the latter comprises means 20 for intercepting the containers, positioned in proximity to an outlet section 21 for the exit of the aspirated air, in order to prevent the passage of the containers. Said intercepting means 20 are obtained by means of a grate 22 applied to the outlet section 21 for the exit of the aspirated air.

Moreover, the accumulation chamber 19 is advantageously positioned inferiorly to the outlet section 21 for the exit of the aspirated air in such a way as not to obstruct it and to allow the containers 2 to fall into it, following only partially the flow of air inside the aspiration channel 17.

As shown in particular in Figures 2 - 5, the flow of air along the aspiration channel 17 is generated by a blower 23 positioned downstream of the outlet section 21. In this way the route of the air develops between the inlet section 18 and the outlet section 21 and continuous outwards, advantageously presenting at least a deviation around a septum 24 to facilitate the fall of the containers into the accumulation chamber 19.

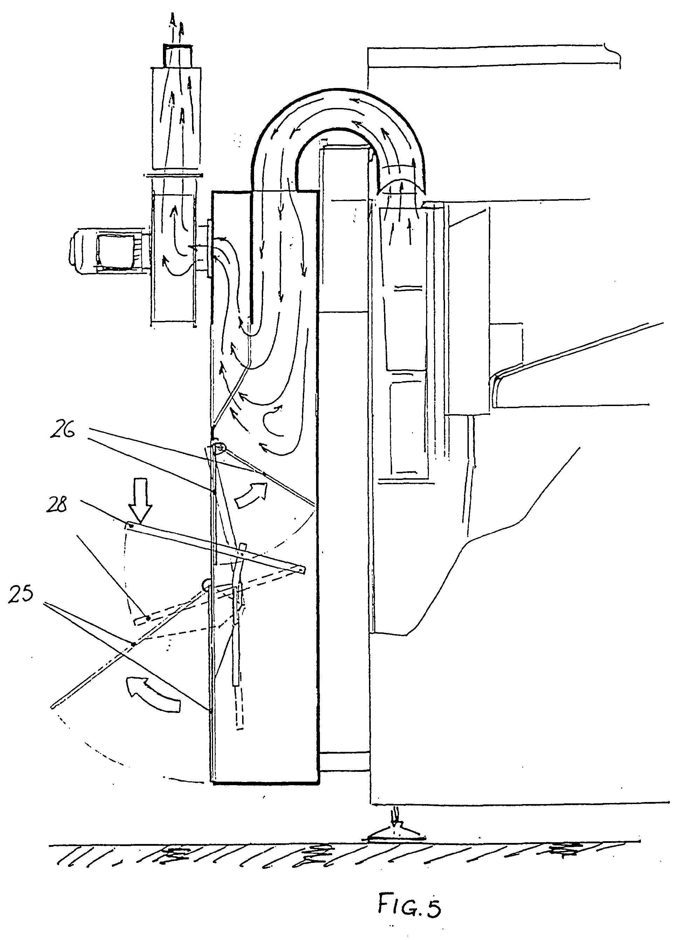

To remove the defective containers from the bottom of the accumulation chamber 19, the latter comprises a door 25 movable between a closed position and an open position. To prevent the flow of air from tending to exit through the door 25 when it is opened, it is advantageously provided for the accumulation chamber 19 to comprise also a plane 26 movable between a resting position in which it remains substantially parallel to the walls of the accumulation chamber 19 and a working position, shown in Figure 5, in which it inferiorly closes the accumulation chamber 19 to prevent preferential passages of the air flow through the open door 25.

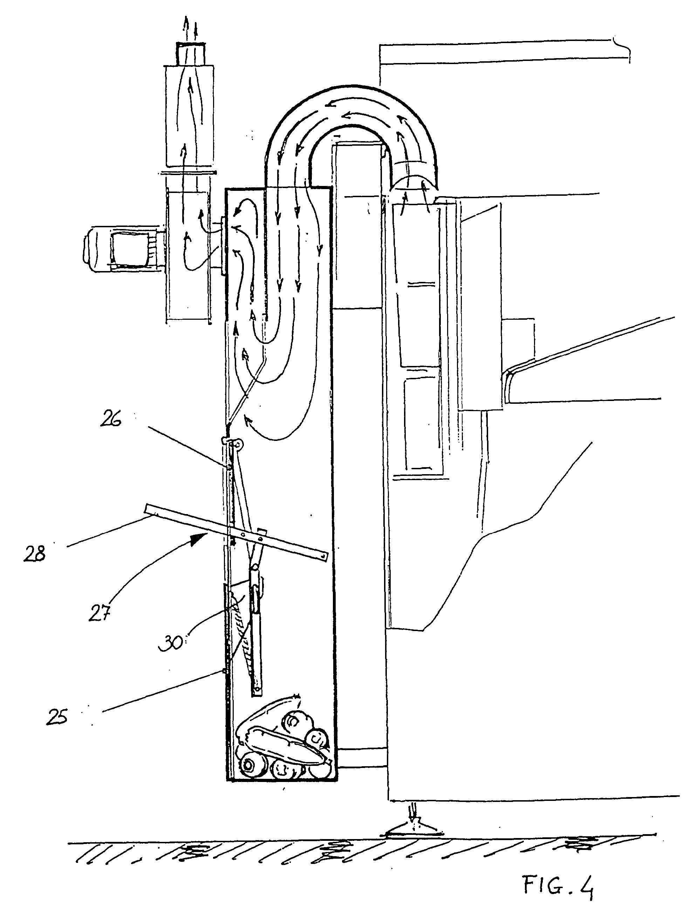

As shown in Figures 4 through 6, both the door 25 and the plane 26 are hinged to the walls of the accumulation chamber and their actuation is commanded by a lever mechanism 27 mounted on the walls of the accumulation chamber 19.

Said lever mechanism is so structured as to actuated first the plane 26 from the resting position to the working position and subsequently the door 25 from the closed position to the open position, in order to obtain a lower closure that prevents the exit of the air flow and whereon the containers 2 can be accumulated before opening the door 26 and offload the defective containers.

For this purpose the lever mechanism 27 comprises a first command lever 28 hinged to the walls of the accumulation chamber 19 and a second lever 29 operatively connected to the first lever 28, to the plane 26 and to the door 25.

The second lever 29 is structured in such a way as to move first the plane from the resting position to the working position and subsequently the door from the closed position to the open position. The door 25 is connected to the second lever 29 by means of a first connecting rod 30 which has an end integral with the door whilst the other end is engaged in a first slot 31 obtained in the second lever 29. The plane 26 is also connected to the second lever 29 by means of a second connecting rod 32 which has an end integral with the plane whilst the other end is engaged in a second slot 33 obtained in the second lever 29.

The first connecting rod 30 represents a portion integral with the door 25 relative whereto the second lever 29 can slide, consequently delaying the opening of the door 25 relative to the closure of the plane 26 and hence of the accumulation chamber 19.

The first command lever 28 commands the actuation of the door 25 from the closed position to the open position and respectively the actuation of the plane 26 from the resting position to the working position whilst the inverse actuation is guaranteed by the presence of return means 34, in the form of elastic elements such as helical springs or the like

According to an embodiment not shown herein, the door 25 and the plane 26 can be operatively associated to at least an actuator structured or commanded in such a way as to move first the plane 26 from the resting position to the working position and subsequently the door 25 from the closed position to the open position.

The apparatus 3 described above can also advantageously comprise a return conduit, not shown herein, able to connect the blower 23 to the machine 1 in such a way as to over-pressurise the machine relative to the external environment and thereby avoid the infiltration of impurities.

The apparatus 3 can advantageously comprise a sanitising set, not shown herein, inserted upstream of the aspiration of the blower 23, and in particular a set of elements ozonising the processed air.

The present invention further relates to a method for ejecting defective containers in a machine for straightening containers, originally comprising a phase whereby defective containers are aspirated, carried out along a route followed by the containers themselves, and in particular downstream of the point of passage between a first route in which the containers are arranged lying on a side and a second route in which the containers are erect and with the mouth oriented upwards.

## Claims

1. An apparatus (3) for ejecting defective containers (2) in a machine (1) for straightening containers, **characterised in that** it comprises an aspiration channel (17) provided with an inlet section (18) positioned along a route followed by the containers (2) for aspirating the defective containers.

2. An apparatus as claimed in claim 1), wherein a first route is defined along which the containers (2) are arranged lying down on a support (13) and driven according to a direction of advance (6) along the support itself, a second route in which the containers are arranged erect and with the mouth oriented upwards after being flipped from the first to the second route through at least an interruption (14) of the support (13), and wherein said inlet section (18) is positioned immediately downstream of the interruption (14) of the support (13) according to the direction of advance (6) of the containers (2) along the first route.

3. An apparatus as claimed in any of the previous claims, wherein the aspiration channel (17) comprises means (20) for intercepting the containers positioned in proximity to an outlet section (21) for the exit of the aspirated air to prevent the passage of the containers.

4. An apparatus as claimed in claim 3, wherein the intercepting means (20) comprise a grate (22) applied to the outlet section (21) for the exit of the aspirated air to prevent the passage of the containers.

5. An apparatus as claimed in any of the previous claims, wherein the aspiration channel (17) comprises a chamber (19) for the accumulation of the defective containers.

6. An apparatus as claimed in claims 3 and 5, wherein the accumulation chamber (19) is positioned inferiorly to the outlet section (21) for the exit of the aspirated air in order not to obstruct said outlet section.

7. An apparatus as claimed in either of the claims 5 or 6, wherein the accumulation chamber (19) comprises at least a door (25) movable between a closed position and an open position to offload the defective containers accumulated on the bottom of the chamber (19).

8. An apparatus as claimed in claim 7, wherein the accumulation chamber (19) comprises a plane (26) movable between a resting position wherein it remains substantially parallel to the walls of the accumulation chamber (19) and a working position in which it closes inferiorly the accumulation chamber (19) to receive the containers and prevent preferential passages of the air flows through the open door (25).

9. An apparatus as claimed in claim 8, wherein the door (25) and the plane (26) are operatively associated to at least an actuator so structured as to move first the plane (26) from the resting position to the working position and subsequently the door (25) from the closed position to the open position.

10. An apparatus as claimed in claim 9, wherein the actuator comprises a lever mechanism (27) mounted on the walls of the accumulation chamber (19) and operatively connected to the door (25) and to the plane (26) hinged to the walls of the accumulation chamber.

11. An apparatus as claimed in claim 10, wherein the lever mechanism (27) comprises a first command lever (28) hinged to the walls of the accumulation chamber and a second lever (29) operatively connected to said first lever (28), to the plane (26) and to the door (25) and structured in such a way as to move first the plane from the resting position to the working position and subsequently the door from the closed position to the open position.

12. An apparatus as claimed in claim 11, wherein the second lever (29) comprises at least a slot (31) in which a portion of the door (25) is engaged, in such a way that the second lever (29) translates relative to the door (25) to delay its opening relative to the closure of the plane (26) and thus of the accumulation chamber (19).

13. An apparatus as claimed in any of the claims from 7 to 12, wherein the door (25) comprises means (34) for returning from the open position to the closed position.

14. An apparatus as claimed in any of the claims from 8 to 12, wherein the plane (26) comprises means (34) for returning from the working position to the resting position.

15. An apparatus as claimed in any of the previous claims, wherein the aspiration conduit (17) is operatively connected to a blower (23) provided with a return conduit to the machine (1) for straightening containers in such a way as to over-pressurise the machine relative to the external environment.

16. An apparatus as claimed in claim 15, wherein upstream of the aspiration of the blower (23) is inserted a set of elements ozonising the processed air.

17. A method for ejecting defective containers in a machine for straightening containers, **characterised in that** it comprises a phase whereby the defective containers are aspirated, carried out along a route followed by the containers.

18. A method as claimed in claim 17, wherein the aspiration of the defective containers is carried out downstream of the point of passage between a first route in which the containers are arranged laying down on a side and a second route in which the containers are erect and with their mouth oriented upwards.
